(19) Europäisches Patentamt
European Patent Office
Office européen des brevets

(11) **EP 3 757 961 B1**

(12) **EUROPÄISCHE PATENTSCHRIFT**

(45) Veröffentlichungstag und Bekanntmachung des Hinweises auf die Patenterteilung:
**03.09.2025   Patentblatt 2025/36**

(21) Anmeldenummer: **20174884.5**

(22) Anmeldetag: **15.05.2020**

(51) Internationale Patentklassifikation (IPC):
*G08G 1/01* (2006.01)          *G01S 13/72* (2006.01)
*G01S 13/931* (2020.01)       *G01S 17/931* (2020.01)
*G01S 7/40* (2006.01)          *G01S 13/08* (2006.01)
*G08G 1/16* (2006.01)

(52) Gemeinsame Patentklassifikation (CPC):
**G08G 1/0112; G01S 7/40; G01S 13/08; G01S 13/726; G01S 13/931; G08G 1/0133; G08G 1/166**

(54) **VERFAHREN, COMPUTERPROGRAMM UND VORRICHTUNG ZUM BESTIMMEN EINES FAHRZEUGABSTANDS FÜR EINEN BEOBACHTUNGSZEITRAUM**

METHOD, COMPUTER PROGRAM AND DEVICE FOR DETERMINING A VEHICLE DISTANCE FOR AN OBSERVATION PERIOD

PROCÉDÉ, PROGRAMME INFORMATIQUE ET DISPOSITIF DE DÉTERMINATION UNE DISTANCE DE VÉHICULE POUR UN INTERVALLE TEMPOREL D'OBSERVATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **28.06.2019   DE 102019209481**

(43) Veröffentlichungstag der Anmeldung:
**30.12.2020   Patentblatt 2020/53**

(73) Patentinhaber: **VOLKSWAGEN AG**
**38440 Wolfsburg (DE)**

(72) Erfinder:
• **Max, Stephan**
  **38518 Gifhorn (DE)**
• **Wegner, Martin**
  **38104 Braunschweig (DE)**
• **Alazzawi, Sabina**
  **80807 München (DE)**
• **Niestroj, Richard**
  **80802 München (DE)**

(56) Entgegenhaltungen:
EP-A1- 3 168 639        DE-A1- 10 006 403
DE-A1- 10 258 794      DE-A1- 102014 209 989

**Beschreibung**

Die vorliegende Erfindung betrifft ein Verfahren, ein Computerprogramm mit Instruktionen und eine Vorrichtung zum Bestimmen eines gemittelten Fahrzeugabstands für einen aktuellen Beobachtungszeitraum. Die Erfindung betrifft weiterhin ein Kraftfahrzeug sowie ein Backend, in denen ein erfindungsgemäßes Verfahren oder eine erfindungsgemäße Vorrichtung eingesetzt wird.

In modernen Kraftfahrzeugen werden vielfältige Daten gesammelt. Beispielsweise beschreibt DE 102 58 794 A1 ein Verfahren zur Erkennung und Verfolgung von Objekten unter Verwendung von in zeitlicher Folge erfassten, tiefenaufgelösten Bildern eines Laserscanners. Bei dem Verfahren wird ein Objekt in einem Erfassungsbereich erfasst. In aufeinander folgenden Zyklen wird aus Bildpunkten eines aktuellen Bildes eine aktuelle Objektkontur für das Objekt gebildet. Für Objekte in einem vorhergehenden Zyklus wird jeweils, ausgehend von einer dem jeweiligen Objekt in dem vorhergehenden Zyklus zugeordneten Objektkontur, eine Objektkontur in dem aktuellen Zyklus prädiziert. Für wenigstens eines der Objekte werden aus der aktuellen Objektkontur eine aktuelle Lage oder aus der aktuellen Objektkontur und der Objektkontur in einem vorhergehenden Zyklus eine Objektgeschwindigkeit ermittelt.

DE 100 06 403 A1 beschreibt ein Verfahren zur Regelung der Geschwindigkeit eines Kraftfahrzeuges und des Abstandes des Kraftfahrzeuges zu mindestens einem vorausfahrenden Kraftfahrzeug. Bei dem Verfahren wird ein Folgesollabstand zu dem vorausfahrenden Kraftfahrzeug vorgegeben. Zudem werden mit Hilfe einer Erfassungseinrichtung die Geschwindigkeit des Kraftfahrzeuges, der Abstand und die Relativgeschwindigkeit zu dem vorausfahrenden Kraftfahrzeug bestimmt. Bei einer Abweichung des erfassten Abstandes vom Folgesollabstand wird das Kraftfahrzeug in Abhängigkeit von der Relativgeschwindigkeit abgebremst oder beschleunigt. Bei einem Verlust des vorausfahrenden Kraftfahrzeuges aus dem Erfassungsbereich der Erfassungseinrichtung werden die Geschwindigkeit des vorausfahrenden Kraftfahrzeuges sowie der Abstand aus vor dem Zielverlust bestimmten Messwerten extrapoliert.

EP 3 168 639 A1 beschreibt ein Verfahren zum Validieren einer Zieldetektion eines Zielobjektes in einem Umgebungsbereich eines Kraftfahrzeugs, welche von einer fahrzeugseitigen Sensoreinrichtung in einem ersten Messzyklus bestimmt wird. Bei dem Verfahren werden zu der Zieldetektion und zu Detektionen, welche von der Sensoreinrichtung in einem zweiten Messzyklus bestimmt werden, jeweils ein Abstandswert und ein Geschwindigkeitswert bestimmt. Basierend auf den Abstands- und Geschwindigkeitswerten des ersten Messzyklus werden dabei aktuelle Abstands- und Geschwindigkeitswerte der Zieldetektion vorhergesagt. Basierend auf den vorhergesagten Abstands- und Geschwindigkeitswerten und den Abstands- und Geschwindigkeitswerten des zweiten Messzyklus wird jeweils ein Ähnlichkeitsmaß zwischen der Zieldetektion des ersten Messzyklus und den Detektionen des zweiten Messzyklus bestimmt. Anhand der bestimmten Ähnlichkeitsmaße wird eine der Detektionen zu der Zieldetektion zugeordnet. Die Zieldetektion wird validiert, falls das Ähnlichkeitsmaß zwischen der Zieldetektion und der zugeordneten Detektion in einem vorbestimmten Toleranzbereich liegt.

Im Zuge der zunehmenden Fahrzeugvernetzung besteht ein Interesse daran, die vom Fahrzeug gesammelten Daten für eine weitergehende Auswertung zu nutzen. Zu diesem Zweck können Daten aus dem Kraftfahrzeug entnommen und einem Backend zugeführt werden. Beispielsweise können Daten von Fahrzeugsensoren orts- und zeitbezogen für Anwendungen in Bezug auf Wetterprognosen, Parkplatzbelegungen oder auch Verkehrsflussdaten extrahiert werden. Im Backend werden die Daten dann mit anderen Daten auf einer Karte kombiniert und den nutzenden Funktionen zurückgeführt.

Ein wichtiger Anwendungsfall für die Datenerhebung ist der Aufbau einer Datenbank für anonymisierte Schwarmdaten zur Forschung, Entwicklung und Absicherung automatischer Fahrfunktionen. Der Anspruch an hochautomatisierte Fahrzeuge ist es, dass diese eine Fülle an unterschiedlichen und teilweise komplexen Szenarien im Straßenverkehr unfallfrei bewältigen. Da die meisten dieser Szenarien nur selten auftreten, gestaltet sich das Testen im realen Straßenverkehr sowohl zeit- als auch kostenintensiv. Für die Entwicklung automatischer Fahrfunktionen bis hin zur Serienreife ist eine signifikante Datenbasis zur Absicherung der Algorithmen erforderlich, die nicht mehr durch klassische Testfahrten per Dauerlauf erreicht werden kann. Es bedarf daher eines Datenpools mit Daten aus möglichst vielfältigen anspruchsvollen Verkehrsszenarien, idealerweise gespeist aus Realfahrten, mit welchem die Algorithmen so trainiert und kontinuierlich verbessert werden, dass die Fahrzeuge im Straßenverkehr unter allen Eventualitäten angemessene Entscheidungen treffen und sicher agieren können.

Die aus einem Fahrzeug entnommenen Daten lassen unter Umständen allerdings einen Rückschluss auf persönliche oder sachliche Verhältnisse einer bestimmten oder zumindest bestimmbaren natürlichen Person zu, beispielsweise über den Fahrer des Kraftfahrzeuges.

Eine derartige Erhebung und Nutzung der Daten ist gemäß den jeweils geltenden Datenschutzgesetzen in der Regel nur mit einer Einverständniserklärung der betroffenen Person möglich. Zwar sind Verbraucher in der heutigen Zeit insbesondere im Bereich der Software durchaus damit vertraut, Nutzungsbedingungen zu akzeptieren und Freigaben für die Datenauswertung zu erteilen, im Automobilbereich ist dies bisher jedoch nicht üblich. Eine Einverständniserklärung zur Nutzung der Daten zu erhalten, ist daher nicht immer einfach. Zudem muss im Rahmen von Softwareaktualisierungen gegebenenfalls eine neue Einverständniserklärung vom Nutzer eingeholt werden, was für den Nutzer auf Dauer ein Ärgernis sein kann.

Zur Gewährleistung des Datenschutzes können die Daten unterschiedlichen Anonymisierungsverfahren zugeführt werden. Ziel dieser Anonymisierungsverfahren ist es, die Identität des Datenerzeugers in einer Anonymisierungsgruppe zu verbergen.

Vor diesem Hintergrund beschreibt DE 10 2011 106 295 A1 ein Verfahren zum bidirektionalen Übertragen von Daten zwischen Kraftfahrzeugen und einem Dienstanbieter. Bei dem Verfahren werden Verkehrsdaten, die einen Verkehrszustand beschreiben und von den Kraftfahrzeugen stammen, an einen Dienstanbieter bereitgestellt. Dies erfolgt ausschließlich über eine von einem Sicherheitsbetreiber betriebene Backend-Servervorrichtung. Mittels der Backend-Servervorrichtung werden die Verkehrsdaten vor dem Übertragen an den Dienstanbieter anonymisiert.

Ein weiteres Verfahren zum anonymen Bereitstellen von Fahrzeugdaten beschreibt DE 10 2015 213 393 A1. Bei dem Verfahren werden Original-Fahrzeugdaten bereitgestellt, die befahrene Streckenabschnitte einer von einem Kraftfahrzeug gefahrenen Fahrstrecke und den Zeitbereich des Befahrens der Streckenabschnitte angeben. Zusätzlich werden künstliche Fahrzeugdaten generiert, die mindestens eine weitere künstliche Fahrstrecke angeben. Bei der künstlichen Fahrstrecke kann es sich um eine zeitliche verschobene Version eines tatsächlich befahrenen Streckenabschnitts handeln. Die Original-Fahrzeugdaten und die künstlichen Fahrzeugdaten werden schließlich übermittelt.

Bei einem anderen Ansatz zur Anonymisierung werden die Daten hinsichtlich Ort oder Zeit verschleiert. Hierbei werden die Daten im Raum oder in der Zeit zufällig additiv verschoben. Auf diese Weise ist eine Identifikation des ursprünglichen Fahrzeugs nur noch in Bezug auf eine Gruppe von Fahrzeugen möglich.

In diesem Zusammenhang beschreibt DE 10 2016 225 287 A1 ein Verfahren zur Verarbeitung von durch ein Kraftfahrzeug erfassten Daten. In einem ersten Schritt wird ein von einem Kraftfahrzeug erfasstes Datum empfangen. Anschließend wird eine örtliche oder zeitliche Verschleierung auf das empfangene Datum angewendet. Das verschleierte Datum wird schließlich zur Auswertung weitergegeben. Die Verschleierung des empfangenen Datums kann dabei innerhalb des Kraftfahrzeugs oder in einem mit dem Kraftfahrzeug in Verbindung stehenden Empfangssystem erfolgen.

DE 10 2018 006 281 A1 beschreibt ein Verfahren zum Betrieb eines Assistenzsystems eines Fahrzeuges. Bei dem Verfahren werden Objekte in einer Umgebung des Fahrzeuges detektiert. In Bezug auf ein erfasstes Objekt wird eine Systemaktion ausgelöst, wenn in einer Datenbank ein Eintrag zu dem Objekt enthalten ist, welcher die Systemaktion als berechtigt markiert. Eine Anonymisierung der Daten erfolgt dahingehend, dass Identifizierungsdaten entfernt und eine räumliche Verschleierung durchgeführt wird.

Die Verschleierung der Daten hinsichtlich Ort und Zeit durch additive Verschiebungen ist gut dafür geeignet, die Identität des Datenerzeugers innerhalb einer Anonymisierungsgruppe zu verbergen. Die Größe der additiven Verschiebung hängt dabei stark vom aktuellen Verkehrsaufkommen ab. Eine große Verkehrsdichte führt zu einer kleinen Verschiebung, wohingegen eine geringe Verkehrsdichte in einer großen Verschiebung resultiert.

Zur Bestimmung der Verkehrsdichte werden die von der Fahrzeugsensorik erfassten und extrahierten Daten des Fahrzeugumfelds herangezogen. Die Fahrzeugsensorik ist allerdings in ihrer Beobachtung des Umfelds räumlich beschränkt. Dies hat zur Folge, dass die bisherigen Verfahren zur Berechnung der Verkehrsdichte und damit zur Bestimmung der Größe der additiven Verschleierung auf das Umfeld des Fahrzeugs beschränkt sind. Dies wiederum resultiert typischerweise in einer stärkeren Verschleierung, da eine zu geringe Verkehrsdichte ermittelt wird, und beeinträchtigt somit die Qualität der angestrebten Funktionen erheblich.

Vor diesem Hintergrund beschreibt DE 10 2014 209989A1 ein Verfahren zur Bestimmung einer Verkehrsdichte für eine elektronische Steuerung in einem Hostfahrzeug. Bei dem Verfahren werden Dichten individuell für verschiedene Fahrspuren ermittelt. Aus diesen Dichten wird dann eine Gesamtdichte ermittelt. Wenn in einer Spur keine Fahrzeuge erkannt werden, kann diese Spur als ungültig angesehen und aus den Dichteberechnungen ausgeschlossen werden.

Es ist eine Aufgabe der Erfindung, Lösungen zum Bestimmen eines gemittelten Fahrzeugabstands für einen aktuellen Beobachtungszeitraum bereitzustellen, bei denen die negativen Auswirkungen der räumlichen Beschränkung der Beobachtung des Fahrzeugumfelds reduziert sind.

Diese Aufgabe wird durch ein Verfahren mit den Merkmalen des Anspruchs 1, durch ein Computerprogramm mit Instruktionen gemäß Anspruch 5 und durch eine Vorrichtung mit den Merkmalen des Anspruchs 6 gelöst. Bevorzugte Ausgestaltungen der Erfindung sind Gegenstand der abhängigen Ansprüche.

Der Begriff Computer ist dabei breit zu verstehen. Insbesondere umfasst er auch Steuergeräte, Workstations und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Bei der erfindungsgemäßen Lösung wird der Ansatz verfolgt, dass im Falle unbrauchbarer Messwerte eine auf statistischen Annahmen beruhende Berechnung des gemittelten Fahrzeugabstands für den aktuellen Beobachtungszeitraum vorgenommen wird. Dazu wird ein für einen vorherigen Beobachtungszeitraum bestimmter gemittelter Fahrzeugabstand herangezogen und auf den aktuellen Beobachtungszeitraum hochgerechnet. Unbrauchbare Messwerte sind beispielsweise fehlerhafte oder fehlende Messwerte oder ein gegen unendlich gehender durchschnittlicher Fahrzeugabstand. Üblicherweise werden die Messwerte mittels einer Sensorik des Kraftfahrzeugs erfasst, die einen endlichen Erfassungsbereich haben. Durch die erfindungsgemäße Lösung wird eine Bestimmung einer Verkehrsdichte größer null auch dann ermöglicht, wenn sich zu einem gegebenen Messzeitpunkt keine Fahrzeuge mehr im Erfassungsbereich befinden. Dadurch wird eine Anonymisierung der Fahrzeugdaten ohne bzw. mit geringerer Entwertung von Zieldaten bzw. Zielfunktionalitäten ermöglicht.

Erfindungsgemäß wird beim Bestimmen des gemittelten Fahrzeugabstands für den aktuellen Beobachtungszeitraum ein Verhältnis einer Dauer des aktuellen Beobachtungszeitraums zu einer Dauer des vorherigen Beobachtungszeitraums berücksichtigt. Dazu wird vorzugsweise der für den vorherigen Beobachtungszeitraum bestimmte gemittelte Fahrzeugabstand proportional zum Verhältnis der Dauer des aktuellen Beobachtungszeitraums zur Dauer des vorherigen Beobachtungszeitraums skaliert. Die Berücksichtigung des Quotienten der Dauern der Beobachtungszeiträume gewährleistet, dass im Falle von unbrauchbaren Messwerten auf jeden Fall ein gemittelter Fahrzeugabstand berechnet wird, der größerer als der zuletzt bestimmte gemittelte Fahrzeugabstand ist. Wird der zuletzt bestimmte gemittelte Fahrzeugabstand proportional zum Quotienten skaliert, so wird der berechnete Fahrzeugabstand umso größer, je länger keine verwertbaren Messwerte vorliegen. Auf diese Weise wird dem Umstand Rechnung getragen, dass bei längerem Ausbleiben verwertbarer Messwerte der berechnete gemittelte Fahrzeugabstand zunehmend unsicher wird.

Erfindungsgemäß haben der aktuelle Beobachtungszeitraum und der vorherige Beobachtungszeitraum einen gleichen Startzeitpunkt. Vorzugsweise ist dieser Startzeitpunkt anpassbar. Auf diese Weise kann festgelegt werden, wie lang der vorherige Beobachtungszeitraum sein soll, der für die Bestimmung des gemittelten Fahrzeugabstands betrachtet werden soll, d.h. welche Messwerte verwertet werden sollen. Dies erlaubt es, die je nach Tageszeit oder befahrener Strecke unterschiedliche Variabilität der Verkehrslage zu berücksichtigen.

Vorzugsweise wird ein erfindungsgemäßes Verfahren oder eine erfindungsgemäße Vorrichtung in einem autonom oder manuell gesteuerten Fahrzeug, insbesondere einem Kraftfahrzeug, eingesetzt. Alternativ kann die erfindungsgemäße Lösung auch in einem Backend genutzt werden, an das die Daten vom Fahrzeug übermittelt werden.

Weitere Merkmale der vorliegenden Erfindung werden aus der nachfolgenden Beschreibung und den angehängten Ansprüchen in Verbindung mit den Figuren ersichtlich.

Fig. 1     zeigt schematisch ein Verfahren zum Bestimmen eines gemittelten Fahrzeugabstands für einen aktuellen Beobachtungszeitraum;

Fig. 2     zeigt eine erste Ausführungsform einer Vorrichtung zum Bestimmen eines gemittelten Fahrzeugabstands für einen aktuellen Beobachtungszeitraum;

Fig. 3     zeigt eine zweite Ausführungsform einer Vorrichtung zum Bestimmen eines gemittelten Fahrzeugabstands für einen aktuellen Beobachtungszeitraum;

Fig. 4     stellt schematisch ein Kraftfahrzeug dar, in dem eine erfindungsgemäße Lösung realisiert ist;

Fig. 5     illustriert eine Verkehrslage zu einem ersten Messzeitpunkt; und

Fig. 6     illustriert eine Verkehrslage zu einem zweiten Messzeitpunkt.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

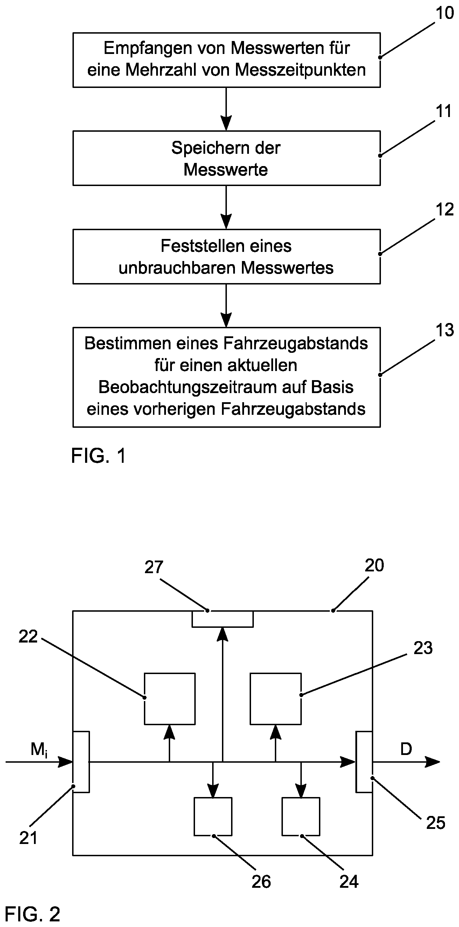

Fig. 1 zeigt schematisch ein Verfahren zum Bestimmen eines gemittelten Fahrzeugabstands für einen aktuellen Beobachtungszeitraum. In einem ersten Schritt werden Messwerte für einen durchschnittlichen Fahrzeugabstand für eine Mehrzahl von Messzeitpunkten empfangen 10. Diese können für eine spätere Nutzung gespeichert werden 11. Die Messwerte werden mittels einer Sensorik eines Kraftfahrzeugs erfasst. Es kann nun der Fall auftreten, dass zu einem Fehlerzeitpunkt ein unbrauchbarer Messwert festgestellt wird 12. In diesem Fall wird ein gemittelter Fahrzeugabstand für einen aktuellen Beobachtungszeitraum, der den Fehlerzeitpunkt beinhaltet, auf Basis eines für einen vorherigen Beobachtungszeitraum aus den erfassten Messwerten bestimmten gemittelten Fahrzeugabstands bestimmt 13. Dabei wird ein Verhältnis einer Dauer des aktuellen Beobachtungszeitraums zu einer Dauer des vorherigen Beobachtungszeitraums berücksichtigt. Vorzugsweise wird der für den vorherigen Beobachtungszeitraum bestimmte Fahrzeugabstand proportional zu diesem Verhältnis skaliert. Der aktuelle Beobachtungszeitraum und der vorherige Beobachtungszeitraum haben einen gleichen Startzeitpunkt. Dieser kann zudem anpassbar sein.

Fig. 2 zeigt eine vereinfachte schematische Darstellung einer ersten Ausführungsform einer Vorrichtung 20 zum Bestimmen eines gemittelten Fahrzeugabstands für einen aktuellen Beobachtungszeitraum. Die Vorrichtung 20 hat einen Eingang 21 zum Empfangen von Messwerten $M_i$ für einen durchschnittlichen Fahrzeugabstand für eine Mehrzahl von Messzeitpunkten. Die Messwerte werden mittels einer Sensorik eines Kraftfahrzeugs erfasst. Eine Auswerteeinheit 22 ist dazu eingerichtet, einen unbrauchbaren Messwert zu einem Fehlerzeitpunkt festzustellen. Eine Recheneinheit 23 der Vorrichtung 20 ist dazu eingerichtet, einen gemittelten Fahrzeugabstand D für einen aktuellen Beobachtungszeitraum, der den Fehlerzeitpunkt beinhaltet, auf Basis eines für einen vorherigen Beobachtungszeitraum aus den erfassten Messwerten bestimmten gemittelten Fahrzeugabstands zu bestimmen. Der bestimmte Fahrzeugabstand D wird schließlich über einen Ausgang 25 zur weiteren Verarbeitung weitergegeben. Die Recheneinheit 23 ist eingerichtet, beim Bestimmen des gemittelten Fahrzeugabstands D ein Verhältnis einer Dauer des aktuellen Beobachtungszeitraums zu einer Dauer des vorherigen Beobachtungszeitraums zu berücksichtigen. Vorzugsweise skaliert die Recheneinheit 23 dazu den für den vorherigen Beobachtungszeitraum bestimmte Fahrzeugabstand proportional zu diesem Verhältnis. Der aktuelle Beobachtungszeitraum und der vorherige Beobachtungszeitraum haben einen gleichen Startzeitpunkt. Dieser kann zudem anpassbar sein.

Die Auswerteeinheit 22 und die Recheneinheit 23 können von einer Kontrolleinheit 24 gesteuert werden. Über eine Benutzerschnittstelle 27 können gegebenenfalls Einstellungen der Auswerteeinheit 22, der Recheneinheit 23 oder der Kontrolleinheit 24 geändert werden. Die in der Vorrichtung 20 anfallenden Daten, insbesondere die empfangenen Messwerte $M_i$, können bei Bedarf in einem Speicher 26 der Vorrichtung 20 abgelegt werden, beispielsweise für eine spätere Auswertung oder für eine Nutzung durch die Komponenten der Vorrichtung 20. Die Auswerteeinheit 22, die Recheneinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU. Der Eingang 21 und der Ausgang 25 können als getrennte Schnittstellen oder als eine kombinierte bidirektionale Schnittstelle implementiert sein.

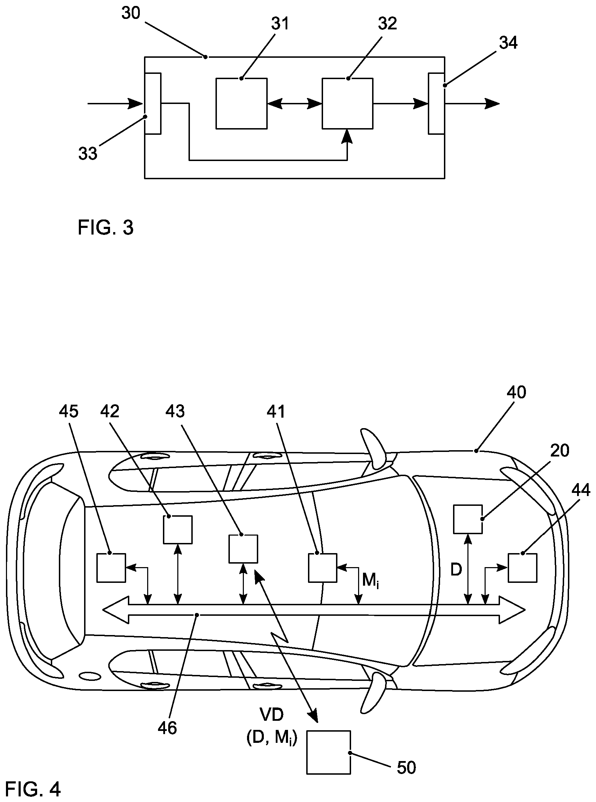

Fig. 3 zeigt eine vereinfachte schematische Darstellung einer zweiten Ausführungsform einer Vorrichtung 30 zum Bestimmen eines gemittelten Fahrzeugabstands für einen aktuellen Beobachtungszeitraum. Die Vorrichtung 30 weist einen Prozessor 32 und einen Speicher 31 auf. Beispielsweise handelt es sich bei der Vorrichtung 30 um einen Computer, eine Workstation oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können volatile und/oder nichtvolatile Speicherbereiche aufweisen und unterschiedlichste Speichergeräte und Speichermedien umfassen, beispielsweise Festplatten, optische Speichermedien oder Halbleiterspeicher.

Die beiden Ausführungsformen der Vorrichtung können in das Kraftfahrzeug integriert sein oder Bestandteil eines mit dem Kraftfahrzeug in Verbindung stehenden Backends sein. Fig. 4 stellt schematisch ein Kraftfahrzeug 40 dar, in dem eine erfindungsgemäße Lösung realisiert ist. Das Kraftfahrzeug 40 weist eine Sensorik 41 auf, die das Umfeld des Fahrzeugs erfasst und aus deren Messwerten $M_i$ ein durchschnittlicher Fahrzeugabstand bestimmbar ist. Weitere Bestandteile des Kraftfahrzeugs 40 sind ein Navigationssystem 42, eine Datenübertragungseinheit 43 sowie eine Reihe von Assistenzsystemen 44, von denen eines exemplarisch dargestellt ist. Mittels der Datenübertragungseinheit 43 kann eine Verbindung zu einem Backend 50 aufgebaut werden, insbesondere zum Übermitteln von erfassten Daten. Auf Basis eines von einer erfindungsgemäßen Vorrichtung 20 bestimmten Fahrzeugabstands D kann eine Verschleierung von Daten erfolgen, die an ein Backend 50 übermittelt werden sollen. In diesem Fall werden verschleierte Daten VD an das Backend 50 übermittelt. Alternativ kann die Verschleierung der Daten auch erst im Backend 50 erfolgen, bevor sie von diesem einem Datennutzer zur Verfügung gestellt werden. In diesem Fall können der bestimmte Fahrzeugabstand D oder die ursprünglichen Messwerte $M_i$ zusammen mit den zu übermittelnden Daten an das Backend 50 übertragen werden. Zur Speicherung von Daten ist ein Speicher 45 vorhanden. Der Datenaustausch zwischen den verschiedenen Komponenten des Kraftfahrzeugs 40 erfolgt über ein Netzwerk 46.

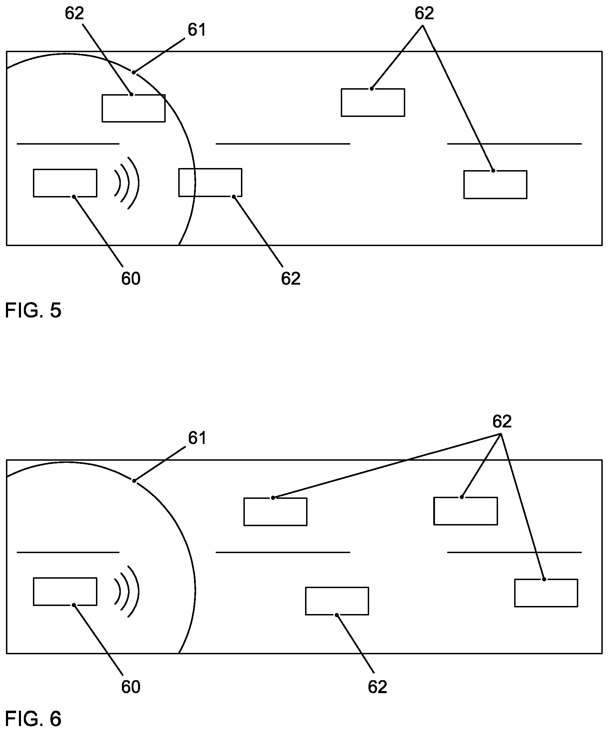

Fig. 5 illustriert eine Verkehrslage zu einem ersten Messzeitpunkt $t_1$. Zur Bestimmung der Verkehrsdichte zu einem gegebenen Zeitpunkt ist insbesondere der mittlere Abstand zwischen den Fahrzeugen 60, 62 relevant. Wie in Fig. 5 dargestellt, kann die Fahrzeugsensorik des Ego-Fahrzeugs 60 nur Auskunft über Abstände zu Fahrzeugen 62 innerhalb eines räumlich beschränkten Gebietes geben, das durch einen Detektionsbereich 61 bestimmt ist.

Zur Veranschaulichung des Lösungsansatzes soll nun angenommen werden, dass zum Messzeitpunkt $t_1$ eine Situation wie in Fig. 5 vorliegt und ein durchschnittlicher Fahrzeugabstand von 100 m gemessen wird.

Fig. 6 illustriert die weiterentwickelte Verkehrslage zum Messzeitpunkt $t_6$. Zuvor detektierte Fahrzeuge befinden sich nun außerhalb der Sensorwahrnehmung.

Eine Datenextraktion erfolgt zu den Messzeitpunkten $t_1 < t_2 < t_3 < t_4 < t_5 < t_6$ mit den folgenden durchschnittlichen Abständen:

| Messzeitpunkt | Durchschnittlicher Abstand |
|---|---|
| $t_1$ | 100 m |
| $t_2$ | 110 m |
| $t_3$ | 150 m |
| $t_4$ | 250 m |
| $t_5$ | ∞ (keine Detektion erfolgt) |
| $t_6$ | ∞ (keine Detektion erfolgt) |

Für den Beobachtungszeitraum $T = t_6 - t_0$, wo $t_0$ der Startzeitpunkt der Aufzeichnung ist, würde die Fahrzeugsensorik demnach berichten, dass der Fahrzeugabstand gegen unendlich geht und daher die Verkehrsdichte gegen null. Dementsprechend müsste eine starke Verschleierung weiterer erfasster Daten durchgeführt werden. Dies ist gleichbedeutend mit einer Entwertung der Daten. Der Fahrzeugabstand wird vorliegend definiert durch das Mittel der Messwerte im Beobachtungszeitraum, d.h. es wird ein über den Beobachtungszeitraum gemittelter Fahrzeugabstand bestimmt.

Sofern der Beobachtungszeitraum T allerdings hinreichend klein ist, ist die eben erläuterte Schlussfolgerung nicht korrekt. Auf Basis der im vorherigen Beobachtungszeitraum $T' = t_4 - t_0$ detektierten Abstände endlicher Länge kann ein korrigierter Fahrzeugabstand D bestimmt werden. Dazu wird der für den Beobachtungszeitraum T' errechnete Abstand D' auf den Beobachtungszeitraum T zu einem Abstand

$$D = \frac{T}{T'} \cdot D' \qquad (1)$$

skaliert. Der Skalierungsfaktor ist dabei durch das Verhältnis der Beobachtungszeiträume T / T' gegeben. Unter der Annahme von $t_0 = 0$ ergibt sich für die oben in der Tabelle angegebenen Werte für den Beobachtungszeitraum T' ein Abstand D' = (100 m + 110 m + 150 m + 250 m) / 4 = 152,5 m. Für den Beobachtungszeitraum T errechnet sich daher ein skalierter Abstand $D = T / T' \cdot 152,5\ m = t_6 / t_4 \cdot 152,5\ m$.

Typischerweise werden Datenpunkte mit einer konstanten Frequenz aus dem Fahrzeug extrahiert, d.h. $t_i = i \cdot c$, mit c > 0. Daher lässt sich obige Formel verallgemeinern zu

$$D = k \cdot D' \qquad (2)$$

wobei k die Anzahl der Messzeitpunkte seit einem Startzeitpunkt geteilt durch die Anzahl der Messzeitpunkte mit einem endlichen gemessenen durchschnittlichen Fahrzeugabstand ist.

Für die oben angeführte Messreihe liefert dies entsprechend einen skalierten Abstand D = 6 / 4 · 152,5 m = 228,75 m für den Beobachtungszeitraum T. Für den Beobachtungszeitraum $T'' = t_5 - t_0$ ergibt sich auf analoge Weise D'' = 5 / 4 · 152.5 m = 190,63 m. Aus diesen Werten ist nun eine Verkehrsdichte ungleich null bestimmbar und damit eine qualitativ hochwertige Anonymisierung der Fahrzeugdaten möglich.

**Bezugszeichenliste**

10 Empfangen von Messwerten für eine Mehrzahl von Messzeitpunkten
11 Speichern der Messwerte
12 Feststellen eines unbrauchbaren Messwertes
13 Bestimmen eines durchschnittlichen Fahrzeugabstands für einen aktuellen Beobachtungszeitraum auf Basis eines für einen vorherigen Beobachtungszeitraum bestimmten durchschnittlichen Fahrzeugabstands
20 Vorrichtung
21 Eingang
22 Auswerteeinheit
23 Recheneinheit
24 Kontrolleinheit

| 25 | Ausgang |
|---|---|
| 26 | Speicher |
| 27 | Benutzerschnittstelle |
| 30 | Vorrichtung |
| 31 | Speicher |
| 32 | Prozessor |
| 33 | Eingang |
| 34 | Ausgang |
| 40 | Kraftfahrzeug |
| 41 | Sensorik |
| 42 | Navigationssystem |
| 43 | Datenübertragungseinheit |
| 44 | Assistenzsystem |
| 45 | Speicher |
| 46 | Netzwerk |
| 50 | Backend |
| 60 | Ego-Fahrzeug |
| 61 | Detektionsbereich |
| 62 | Fahrzeug |
| D | Fahrzeugabstand |
| $M_i$ | Messwert |
| VD | Verschleierte Daten |

**Patentansprüche**

1. Computerimplementiertes Verfahren zum Bestimmen eines gemittelten Fahrzeugabstands (D) für einen aktuellen Beobachtungszeitraum, mit den Schritten:

   - Empfangen (10) in einem ersten Beobachtungszeitraum ($t_1$ bis $t_4$) von Messwerten ($M_i$ 100 m, 110 m, 150 m, 250 m) für einen durchschnittlichen Fahrzeugabstand für eine Mehrzahl von Messzeitpunkten, ($t_1$, $t_2$, $t_3$, $t_4$) wobei die Messwerte ($M_i$ 100 m, 110 m, 150 m, 250 m) aus gemessenen Abständen zwischen einem Ego-Fahrzeug (60) und Fahrzeugen (62) in einem Detektionsbereich (61) einer Sensorik (41) des Ego-Fahrzeugs (60) bestimmt werden;
   - Feststellen (12) eines unbrauchbaren Messwertes ($M_i$) zu einem nachfolgenden Fehlerzeitpunkt; ($t_5$, $t_6$); und
   - Bestimmen (13) eines gemittelten Fahrzeugabstands (D) für den aktuellen Beobachtungszeitraum ($t_1$ bis $t_5$, $t_1$ bis $t_6$), der den Fehlerzeitpunkt beinhaltet, auf Basis einer Skalierung eines für einen vorherigen ersten Beobachtungszeitraum ($t_1$ bis $t_4$) aus den erfassten Messwerten ($M_i$ 100 m, 110 m, 150 m, 250 m) bestimmten gemittelten Fahrzeugabstands (D), wobei der aktuelle Beobachtungszeitraum ($t_1$ bis $t_5$, $t_1$ bis $t_6$) und der vorherige erste Beobachtungszeitraum ($t_1$ bis $t_4$) einen gleichen Startzeitpunkt haben, und wobei ein Verhältnis einer Dauer des aktuellen Beobachtungszeitraums : ($t_1$ bis $t_5$, $t_1$ bis $t_6$) zu einer Dauer des vorherigen Beobachtungszeitraums ($t_1$ bis $t_4$) berücksichtigt wird.

2. Verfahren gemäß Anspruch 1, wobei ein unbrauchbarer Messwert ($M_i$) vorliegt, wenn der Messwert ($M_i$) fehlerhaft ist, fehlt oder gegen unendlich geht.

3. Verfahren gemäß Anspruch 1 oder 2, wobei der für den vorherigen Beobachtungszeitraum bestimmte gemittelte Fahrzeugabstand proportional zum Verhältnis der Dauer des aktuellen Beobachtungszeitraums zur Dauer des vorherigen Beobachtungszeitraums skaliert wird.

4. Verfahren gemäß einem der vorherigen Ansprüche, wobei der Startzeitpunkt anpassbar ist.

5. Computerprogramm mit Instruktionen, die bei Ausführung durch einen Computer den Computer zur Ausführung der Schritte eines Verfahrens gemäß einem der Ansprüche 1 bis 4 zum Bestimmen eines gemittelten Fahrzeugabstands (D) für einen aktuellen Beobachtungszeitraum veranlassen.

6. Vorrichtung (20) konfiguriert, um das Verfahren nach Anspruch 1 durchzuführen zum Bestimmen eines gemittelten Fahrzeugabstands (D) für einen aktuellen Beobachtungszeitraum, mit:

- einem Eingang (21) zum Empfangen (10) in einem ersten Beobachtungszeitraum ($t_1$ bis $t_4$) von Messwerten (Mi 100 m, 110 m, 150 m, 250 m) für einen durchschnittlichen Fahrzeugabstand für eine Mehrzahl von Messzeitpunkten, wobei die Messwerte (Mi 100 m, 110 m, 150 m, 250 m) aus gemessenen Abständen zwischen einem Ego-Fahrzeug (60) und Fahrzeugen (62) in einem Detektionsbereich (61) einer Sensorik (41) des Ego-Fahrzeugs (60) bestimmt werden;
- einer Auswerteeinheit (22) zum Feststellen (12) eines unbrauchbaren Messwertes ($M_i$) zu einem nachfolgenden Fehlerzeitpunkt ($t_5$, $t_6$); und
- einer Recheneinheit (23) zum Bestimmen (13) eines gemittelten Fahrzeugabstands (D) für den aktuellen Beobachtungszeitraum ($t_1$ bis $t_5$, $t_1$ bis $t_6$), der den Fehlerzeitpunkt beinhaltet, auf Basis einer Skalierung eines für einen vorherigen ersten Beobachtungszeitraum ($t_1$ bis $t_4$) aus den erfassten Messwerten bestimmten gemittelten Fahrzeugabstands, wobei der aktuelle Beobachtungszeitraum ($t_1$ bis $t_5$, $t_1$ bis $t_6$) und der vorherige erste Beobachtungszeitraum ($t_1$ bis $t_4$) einen gleichen Startzeitpunkt haben, und wobei ein Verhältnis einer Dauer des aktuellen Beobachtungszeitraums ($t_1$ bis $t_5$, $t_1$ bis $t_6$) zu einer Dauer des vorherigen ersten Beobachtungszeitraums ($t_1$ bis $t_4$) berücksichtigt wird.

7.  Kraftfahrzeug (40), **dadurch gekennzeichnet, dass** es eine Vorrichtung (20) gemäß Anspruch 6 aufweist.

8.  Backend (50) zur Verarbeitung von durch ein Kraftfahrzeug (40) erfassten Daten, **dadurch gekennzeichnet, dass** es eine Vorrichtung (20) gemäß Anspruch 6 aufweist

## Claims

1.  Computer-implemented method for determining an averaged vehicle spacing (D) for a current observation period, comprising the steps of:

    - receiving (10) in a first observation period ($t_1$ to $t_4$) measured values ($M_i$ 100 m, 110 m, 150 m, 250 m) for an average vehicle spacing for a plurality of measurement times ($t_1$, $t_2$, $t_3$, $t_4$), wherein the measured values (Mi100 m, 110 m, 150 m, 250 m) are determined from measured spacings between an ego vehicle (60) and vehicles (62) in a detection region (61) of a sensor system (41) of the ego vehicle (60);
    - detecting (12) an unusable measured value ($M_i$) at a subsequent error time ($t_5$, $t_6$); and
    - determining (13) an averaged vehicle spacing (D) for the current observation period ($t_1$ to $t_5$, $t_1$ to $t_6$), which includes the error time, based on a scaling of an averaged vehicle spacing (D) determined for a previous first observation period ($t_1$ to $t_4$) from the recorded measured values (Mi 100 m, 110 m, 150 m, 250 m), wherein the current observation period ($t_1$ to $t_5$, $t_1$ to $t_6$) and the previous first observation period ($t_1$ to $t_4$) have the same starting time, and wherein a ratio of a duration of the current observation period ($t_1$ to $t_5$, $t_1$ to $t_6$) to a duration of the previous observation period ($t_1$ to $t_4$) is taken into account.

2.  Method according to claim 1, wherein an unusable measured value ($M_i$) is present if the measured value ($M_i$) is faulty, missing or tends to infinity.

3.  Method according to claim 1 or 2, wherein the averaged vehicle spacing determined for the previous observation period is scaled proportionally to the ratio of the duration of the current observation period to the duration of the previous observation period.

4.  Method according to any of the preceding claims, wherein the start time is adjustable.

5.  Computer program comprising instructions that, when executed by a computer, cause the computer to execute the steps of a method according to any of claims 1 to 4 for determining an averaged vehicle spacing (D) for a current observation period.

6.  Device (20) configured to perform the method according to claim 1 for determining an averaged vehicle spacing (D) for a current observation period, comprising:

    - an input (21) for receiving (10) in a first observation period ($t_1$ to $t_4$) measured values (Mi 100 m, 110 m, 150 m, 250 m) for an average vehicle spacing for a plurality of measuring times, wherein the measured values (Mi 100 m, 110 m, 150 m, 250 m) are determined from measured spacings between an ego vehicle (60) and vehicles (62) in a detection region (61) of a sensor system (41) of the ego vehicle (60);
- an evaluation unit (22) for detecting (12) an unusable measured value ($M_i$) at a subsequent error time ($t_5$, $t_6$); and
- a computing unit (23) for determining (13) an averaged vehicle spacing (D) for the current observation period ($t_1$ to $t_5$, $t_1$ to $t_6$), which includes the error time, based on a scaling of an averaged vehicle spacing determined for a previous first observation period ($t_1$ to $t_4$) from the recorded measured values, wherein the current observation period ($t_1$ to $t_5$, $t_1$ to $t_6$) and the previous first observation period ($t_1$ to $t_4$) have the same starting time, and wherein a ratio of a duration of the current observation period ($t_1$ to $t_5$, $t_1$ to $t_6$) to a duration of the previous first observation period ($t_1$ to $t_4$) is taken into account.

7. Motor vehicle (40), **characterized in that** it comprises a device (20) according to claim 6.

8. Backend (50) for processing data collected by a motor vehicle (40),
**characterized in that** it comprises a device (20) according to claim 6.

## Revendications

1. Procédé mis en œuvre par ordinateur permettant de déterminer une distance moyenne entre véhicules (D) pour une période d'observation actuelle, comportant les étapes de :

- réception (10) dans une première période d'observation ($t_1$ à $t_4$) de valeurs de mesure ($M_i$ 100 m, 110 m, 150 m, 250 m) pour une distance moyenne entre véhicules pour une pluralité d'instants de mesure, ($t_1$, $t_2$, $t_3$, $t_4$) dans lequel les valeurs de mesure ($M_i$ 100 m, 110 m, 150 m, 250 m) sont déterminées à partir de distances mesurées entre un véhicule Ego (60) et des véhicules (62) dans une zone de détection (61) d'un système de capteurs (41) du véhicule Ego (60) ;
- définition (12) d'une valeur de mesure inutilisable ($M_i$) à un instant d'erreur suivant ; ($t_5$, $t_6$) ; et
- détermination (13) d'une distance moyenne entre véhicules (D) pour la période d'observation ($t_1$ à $t_5$, $t_1$ à $t_6$) actuelle, qui contient l'instant d'erreur, sur la base d'une mise à l'échelle d'une distance moyenne entre véhicules (D) déterminée pour une première période d'observation ($t_1$ à $t_4$) précédente à partir des valeurs de mesure ($M_i$ 100 m, 110 m, 150 m, 250 m) acquises, dans lequel la période d'observation ($t_1$ à $t_5$, $t_1$ à $t_6$) actuelle et la première période d'observation ($t_1$ à $t_4$) précédente ont un même instant de départ, et dans lequel un rapport entre une durée de la période d'observation : ($t_1$ à $t_5$, $t_1$ à $t_6$) actuelle à une durée de la période d'observation ($t_1$ à $t_4$) précédente est pris en compte.

2. Procédé selon la revendication 1, dans lequel il y a une valeur de mesure inutilisable ($M_i$) lorsque la valeur de mesure ($M_i$) est erronée, manquante ou tend vers l'infini.

3. Procédé selon la revendication 1 ou 2, dans lequel la distance moyenne entre véhicules déterminée pour la période d'observation précédente est mise à l'échelle proportionnellement au rapport entre la durée de la période d'observation actuelle et la durée de la période d'observation précédente.

4. Procédé selon l'une des revendications précédentes, dans lequel l'instant de départ est adaptable.

5. Programme d'ordinateur comportant des instructions, qui, lors de leur exécution par un ordinateur, amènent l'ordinateur à exécuter les étapes d'un procédé selon l'une des revendications 1 à 4 pour la détermination d'une distance moyenne entre véhicules (D) pour une période d'observation actuelle.

6. Dispositif (20) configuré pour effectuer le procédé selon la revendication 1 pour la détermination d'une distance moyenne entre véhicules (D) pour une période d'observation actuelle, comportant :

- une entrée (21) pour recevoir (10) dans une première période d'observation ($t_1$ à $t_4$) des valeurs de mesure ($M_i$ 100 m, 110 m, 150 m, 250 m) pour une distance moyenne entre véhicules pour une pluralité d'instants de mesure, dans lequel les valeurs de mesure ($M_i$ 100 m, 110 m, 150 m, 250 m) sont déterminées à partir de distances mesurées entre un véhicule Ego (60) et des véhicules (62) dans une zone de détection (61) d'un système de capteurs (41) du véhicule Ego (60) ;
- une unité d'évaluation (22) pour définir (12) une valeur de mesure inutilisable ($M_i$) à un instant d'erreur suivant ($t_5$, $t_6$) ; et

- une unité de calcul (23) pour déterminer (13) une distance moyenne entre véhicules (D) pour la période d'observation ($t_1$ à $t_5$, $t_1$ à $t_6$) actuelle, qui contient l'instant d'erreur, sur la base d'une mise à l'échelle d'une distance moyenne entre véhicules déterminée pour une première période d'observation ($t_1$ à $t_4$) précédente à partir des valeurs de mesure acquises, dans lequel la période d'observation ($t_1$ à $t_5$, $t_1$ à $t_6$) actuelle et la première période d'observation ($t_1$ à $t_4$) précédente ont un même instant de départ, et dans lequel un rapport entre une durée de la période d'observation ($t_1$ à $t_5$, $t_1$ à $t_6$) actuelle et une durée de la première période d'observation ($t_1$ à $t_4$) précédente est pris en compte.

7. Véhicule automobile (40), **caractérisé en ce qu'**il présente un dispositif (20) selon la revendication 6.

8. Serveur dorsal (50) pour le traitement de données acquises par un véhicule automobile (40), **caractérisé en ce qu'**il présente un dispositif (20) selon la revendication 6

Empfangen von Messwerten für
eine Mehrzahl von Messzeitpunkten

10

Speichern der
Messwerte

11

Feststellen eines
unbrauchbaren Messwertes

12

Bestimmen eines Fahrzeugabstands
für einen aktuellen
Beobachtungszeitraum auf Basis
eines vorherigen Fahrzeugabstands

13

FIG. 1

FIG. 2

FIG. 3

FIG. 4

FIG. 5

FIG. 6

# EP 3 757 961 B1

**IN DER BESCHREIBUNG AUFGEFÜHRTE DOKUMENTE**

**In der Beschreibung aufgeführte Patentdokumente**

- DE 10258794 A1
- DE 10006403 A1
- EP 3168639 A1
- DE 102011106295 A1
- DE 102015213393 A1
- DE 102016225287 A1
- DE 102018006281 A1
- DE 102014209989 A1